Europäisches Patentamt

European Patent Office

Office européen des brevets

(19)

(11) Veröffentlichungsnummer: **0 515 863 A2**

# (12) EUROPÄISCHE PATENTANMELDUNG

(21) Anmeldenummer: **92107411.8**

(22) Anmeldetag: **30.04.92**

(51) Int. Cl.5: **B29D 7/00**, B29C 55/12,
//B29L7/00

(30) Priorität: **06.05.91 DE 4114670**

(43) Veröffentlichungstag der Anmeldung:
**02.12.92 Patentblatt 92/49**

(84) Benannte Vertragsstaaten:
**DE FR GB LU NL**

(71) Anmelder: **HOECHST AKTIENGESELLSCHAFT
Postfach 80 03 20
W-6230 Frankfurt am Main 80(DE)**

(72) Erfinder: **Crass, Günther
Bachstrasse 7
W-6204 Taunusstein 4(DE)**
Erfinder: **Janocha, Siegfried, Dr.
Weinfeldstrasse 28
W-6200 Wiesbaden(DE)**
Erfinder: **Bammert, Gisbert
Jahnstrasse 7
W-6228 Eltville-Rauenthal(DE)**

(54) **Verfahren zur Herstellung von Folienbahnen von geringer Dicke.**

(57) Es wird ein Verfahren zur Herstellung von ultradünner biaxial gestreckter Folie aus thermoplastischem Kunststoff beschrieben, bei dem wenigstens zwei Folienbahnen übereinanderliegend gemeinsam in Längs- und Querrichtung gestreckt werden. Vor dem ersten Streckschritt werden die Folienbahnen einer Wärmebehandlung unterzogen. Nach dem Strecken werden die Folienbahnen wieder voneinander getrennt.

EP 0 515 863 A2

Die Erfindung betrifft ein Verfahren zur Herstellung biaxial gestreckter Folienbahnen aus thermoplastischem Kunststoff mit einer Dicke von weniger als 2 μm, bei dem wenigstens zwei Folienbahnen übereinanderliegend gemeinsam in Längs- und Querrichtung gestreckt werden.

Ultradünnstfolien mit einer Dicke von weniger als 3 μm, insbesondere weniger als 1 μm, werden zur Herstellung von Kondensatoren für die Mikroelektronik in immer stärkerem Ausmaß benötigt.

Die selbsttragende Herstellung derart dünner Folien bereitet aber in der Praxis außerordentliche Schwierigkeiten. In der Literatur werden deshalb verschiedene Verfahren beschrieben, die im wesentlichen darauf hinzielen, daß die Dünnstfolie gemeinsam mit einer bzw. auf einer Trägerfolie zunächst hergestellt und danach von der Trägerfolie abgezogen und aufgewickelt wird.

Die DE-A-17 04 764 beschreibt, wie Einzelfolien mittels Druck und/oder Wärme zur Haftung gebracht werden können. Nachteiligerweise kommt es dabei aber, wegen unvermeidbarer geringfügiger Dickenschwankungen der Einzelfolien, immer wieder zu Faltenbildungen, wobei die Falten durch das Laminierverfahren zusätzlich eingebügelt werden, was dazu führt, daß solche Folien für den bestimmungsgemäßen Einsatzzweck unbrauchbar werden.

Die DE-A-24 31 385 beschreibt eine Vorrichtung, bei der nebeneinander zwei Vorfolien hergestellt werden, wobei vor der Streckung in Querrichtung eine Zusammenführung der beiden Folien erfolgt. Bei dieser Methode fehlt jedoch die tragende Funktion der Basisschicht, und es werden häufig Abrisse der Dünnstfolie beobachtet.

Die EP-A-0 153 081 betrifft das Strecken von coextrudierten Verbundfolien, wobei die einzelnen Schichten aus unterschiedlichen Polymeren bestehen, und die Delaminierung des Verbundes nach der Streckung. Dabei lassen sich jedoch die Fließgeschwindigkeiten der unterschiedlichen Kunststoffe in der Praxis nicht genau aufeinander abstimmen. Die Einstellung eines gleichmäßigen Dickenprofils über die Folienbreite bereitet ebenfalls große Probleme, da die Zuordnung der Dickenverteilung von Gesamtfolie und Deckschicht schwierig ist und außerdem die Profileinstellung der unterschiedlichen Schichten bei der Coextrusion ständigen Schwankungen unterworfen ist.

Es ist auch bekannt, daß der Kunststoff schon beim Abziehen der Schmelze aus der Düse eine bestimmte, meßbare molekulare Orientierung erhält, deren Ausmaß von technischen Bedingungen wie Düsenanordnung, Düsengröße und Abzugsgeschwindigkeit und von der chemischen Zusammensetzung des Kunststoffs und seinem Polymerisationsgrad abhängt. Die Ausprägung der molekularen Vororientierung, ihre Regelmäßigkeit und ihr Ausmaß, ist von wesentlicher Bedeutung für die Weiterverstreckbarkeit und für die physikalischen Eigenschaften der Endfolie, z. B. mechanische Eigenschaften wie Reißfestigkeit und Dimensionsstabilität oder das Dickenprofil, und macht sich gerade bei der Herstellung von besonders dünnen Folien in ganz besonderem Maße bemerkbar.

Aufgabe der vorliegenden Erfindung war es daher, ein Verfahren zu entwickeln, das es ermöglicht, dünne Folien, mit einer Dicke von 2 μm und weniger, unter gezielter Beeinflussung der molekularen Vororientierung mit optimierter Laufsicherheit und verbesserter Dickengleichmäßigkeit herzustellen.

Gelöst wird diese Aufgabe durch ein Verfahren der eingangs genannten Gattung, dessen Kennzeichenmerkmal darin besteht, daß die Folienbahnen vor dem ersten Streckschritt in Längs- oder Querrichtung übereinanderliegend gemeinsam einer Wärmebehandlung unterzogen werden. Die Wärmebehandlung erfolgt erfindungsgemäß bevorzugt bei Temperaturen oberhalb der Glastemperatur des Kunststoffs, der für die Folie mit einer Dicke von 2 μm und kleiner vorgesehen ist. Die Wärmebehandlung kann mittels Wasserbad, Heißluft oder Wärmestrahler erfolgen. Die Zeitdauer der Wärmebehandlung liegt bei kleiner/gleich 60 s, vorzugsweise kleiner 30 s.

Nach der Wärmebehandlung werden die Folienbahnen übereinanderliegend gemeinsam der biaxialen Streckung in Längs- und Querrichtung unterzogen, wobei erfindungsgemäß bevorzugt ist, daß das Flächenstreckverhältnis größer/gleich 16 ist, vorzugsweise größer/gleich 20. Insbesondere soll sich die Längsstreckung ohne weitere Zwischenschritte an die Wärmebehandlung anschließen, wobei z. B. bei Polyesterfolie das Längsstreckverhältnis größer sein soll als das Querstreckverhältnis. An die nachfolgende Querstreckung schließt sich dann die Hitzefixierung an, und danach werden die Folienbahnen voneinander getrennt.

Die Temperatur der Wärmebehandlung, die vorzugsweise mittels eines Wasserbades durchgeführt wird, liegt im Bereich von 50 bis 90 °C, besonders bevorzugt zwischen 70 und 80 °C.

Als thermoplastische Kunststoffe eignen sich im Rahmen der vorliegenden Erfindung insbesondere synthetische Polymere wie Polyolefine, Polyester, Polyamide, Polysulfone wie Polyarylethersulfon, Polyaryletherketone, Polyphenylensulfid oder Polystyrol. Vorzugsweise eignen sich erfindungsgemäß Polyolefine und Polyester.

Als Polyolefine kommen isotaktisches Polypropylen oder Copolymere mit Propyleneinheiten und andere Alpha-Olefine mit 2 bis 6 C-Atomen in Frage sowie Mischungen von diesen. Isotaktisches Polypropylen mit einem n-heptanlöslichen Anteil von nicht mehr als 10 %, Copolymere von Propylen und Ethylen mit einem Ethylenanteil von 2 bis 10 Gew.-% oder Copolymere von Propylen und Butylen oder 4-Methylpenten mit einem Propylenanteil von mindestens 60 Gew.-% stellen bevorzugte Polyolefine dar.

Unter Polyester sind Homo- und Copolykondensate, Gemische verschiedener Polyester sowie Abmischungen oder Blends von Polyestern mit anderen Polymeren zu verstehen.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, Polyethylen-2,6-naphthalindicarboxylat oder Polyethylen-p-hydroxy-benzoat.

Die Polyester können bis zu 30 Mol-% aus Comonomereinheiten aufgebaut sein, wobei eine Variation in der Glykol- und/oder der Säurekomponente möglich ist. Als Säurekomponente können die Copolyester u. a. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelitsäure u. a. enthalten.

Die Polyestergemische können aus Polyester-Homopolymeren, Polyester-Copolymeren oder Polyester-Homo- und -Copolymeren bestehen. Beispiele hierfür sind Abmischungen von Polyethylenterephthalat/Polybutylenterephthalat, Polyethylenterephthalat/Polyethylenisophthalat oder Polyethylenisophthalat/5-Natriumsulfoisophthalat.

Beispiele für Polymere, die der Polyester enthalten kann, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polyacetone, Polycarbonate, Polytetrafluorethylen, Polysulfone u. a.

In bevorzugter Ausführungsform des erfindungsgemäßen Verfahrens wird vorgesehen, daß die Trägerschicht aus Polyolefin und die dünne Deckschicht aus Polyester oder Polyphenylensulfid bestehen.

Das Zusammenführen der Folienbahnen kann nach dem üblichen Laminierverfahren geschehen, wobei getrennt voneinander hergestellte Einzelfolien unter Einwirkung von Druck und/oder Wärme miteinander zu einem Mehrlagenverbund vereinigt werden. Erfindungsgemäß soll der Einsatz eines Haftklebers zwischen den Folienbahnen vermieden werden, damit das Risiko eines Abrisses beim abschließenden Delaminieren gering gehalten wird. Genausogut kann auch das Coextrusionsverfahren durchgeführt werden, bei dem die Schmelzen der einzelnen Kunststoffe vor oder in der Düse zusammengeführt und dann gemeinsam durch die Düse extrudiert werden. Erfindungsgemäß bevorzugt sollen die Haftkräfte zwischen den Folienbahnen, insbesondere der ultradünnen Polyesterdeckschicht und der polyolefinischen Trägerschicht, kleiner/gleich 0,5 N/15 mm sein, damit die Folienbahnen einwandfrei wieder voneinander getrennt werden können.

Die Erfindung soll nachfolgend anhand von Ausführungsbeispielen im Vergleich mit herkömmlichen Herstellungsverfahren näher erläutert werden, ohne jedoch auf die konkret dargestellten Erscheinungsformen eingeschränkt zu sein.

Vergleichsbeispiel 1

Eine 30 $\mu$m dicke Polyesterfolie aus Polyethylenterephthalat (PET) wurde am Brückner-Karo-Rahmen simultan bei einer Strecktemperatur von 95 °C und einer Aufheizzeit von 1 min ohne Wärmevorbehandlung mit einem größtmöglichen Flächenstreckverhältnis $\lambda_F$ = 12,2 ($\lambda_L$ = 3,5, $\lambda_q$ = 3,5) verstreckt.

Beispiel 1

Die gleiche PET-Folie wie in Vergleichsbeispiel 1 wurde in einem Wasserbad bei 80 °C und einer Verweilzeit von 60 s wärmevorbehandelt. Zur Erhaltung der Formstabilität (Vermeidung von Schrumpf) wurde die PET-Folie unter Spannung gehalten. Nach der Wärmebehandlung wurde die Folie in gleicher Weise wie die nicht behandelte Folie simultan verstreckt.

Durch die Wärmebehandlung konnte das Flächenstreckverhältnis um 20 % auf $\lambda_F$ = 15 erhöht werden, was zu einer beträchtlichen Verringerung der Foliendicke führte.

Vergleichsbeispiel 2

Eine 30 $\mu$m dicke PET-Folie wurde am Brückner-Karo-Rahmen bei Strecktemperaturen von 105 °C und einer Aufheizzeit von 1 min längs/quer verstreckt. Hierbei wurden maximale Flächenstreckverhältnisse von $\lambda_F$ = 21,6 ($\lambda_L$ = 4,5, $\lambda_q$ = 4,8) erreicht.

Beispiel 2.1

Durch Wärmebehandlung der PET-Folie aus Vergleichsbeispiel 2 vor der eigentlichen Verstreckung im

3

Wasserbad bei Temperaturen von 80 °C und einer Verweilzeit von 60 s konnte das Flächenstreckverhältnis um 40 % auf $\lambda_F$ = 30,8 erhöht und die Foliendicke entsprechend reduziert werden.

Damit ist der Vorteil der Aufhebung der molekularen Vororientierung zur Verbesserung (Erhöhung) der Verstreckbarkeit bei der Herstellung von ultradünnen Polyesterfolien mittels Trägertechnik (Coextrusion und Laminierung) bestätigt.

Beispiel 2.2

Eine 30 $\mu$m dicke PET-Folie wurde mit einer Geschwindigkeit von 0,23 m/min über ein Walzenpaar durch ein auf 70 °C temperiertes Wasserbad geführt. Anschließend wurde die Folie off-line am Brückner-Karo-Rahmen längs/quer verstreckt.

Dabei konnte das Flächenstreckverhältnis im Vergleich zu einer unbehandelten PET-Folie um 15 % auf $\lambda_F$ = 25 erhöht werden.

Vergleichsbeispiel 3

Es ist bekannt, daß die am Brückner-Karo-Rahmen ermittelten Versuchsparameter auf kontinuierlich arbeitende Streckanlagen übertragbar sind.

Eine Trägerfolie aus LLDPE (linear low density polyethylene), Dicke ca. 100 $\mu$m, wurde mit einer PET-Folie, Dicke ca. 30 $\mu$m, vor der Längsstreckung zusammengeführt und übereinandergelegt. Nach erfolgter Zusammenführung der Folien wurden diese im Längsstreckwerk mittels Wärme (Temperaturen Längsstreckung 110 bis 115 °C) zu einem Verbund kaschiert und anschließend gemeinsam biaxial verstreckt.

Bei einem Flächenstreckverhältnis von $\lambda_F$ = 16,8 ($\lambda_L$ = 4,0, $\lambda_q$ = 4,2) konnten dünne Polyesterfolien im Dickenbereich von 1,5 $\mu$m hergestellt werden.

Die dünne Polyesterfolie kann leicht von der Trägerfolie getrennt werden. Die Verbundfestigkeit (Delaminierkraft) liegt unter 0,3 N/15 mm.

Beispiel 3

Führt man vor der Verstreckung gemäß Vergleichsbeispiel 3 beide Folienbahnen, zumindest aber die Polyesterfolie, über ein Walzenpaar durch ein auf 80 °C temperiertes Wasserbad, kann bei der anschließenden Verstreckung der Folien das Flächenstreckverhältnis um 40 % auf $\lambda_F$ = 23,5 erhöht und gleichzeitig die Foliendicke der Polyesterschicht von 1,5 $\mu$m auf 1,2 $\mu$m reduziert werden. Die Laufsicherheit und Verstreckbarkeit der Folien lassen nichts zu wünschen übrig.

Vergleichsbeispiel 4

Mittels Coextrusionstechnik wurde eine ABA-Mehrschichtfolie mit Polyesterdeckschichten hergestellt, wobei für die Träger(Basis)schicht unmodifiziertes [R]Tafmer XR 107 LN, ein Polymerblend aus $C_3 C_4$- und $C_2 C_3 C_4$-Bausteinen, eingesetzt wurde. Die Dicke der Trägerschicht betrug 150 $\mu$m, die der Polyesterdeckschichten jeweils ca. 15 $\mu$m. Bei einem Flächenstreckverhältnis von $\lambda_F$ = 17 konnten dünne Polyesterdeckschichten im Dickenbereich von 0,6 $\mu$m erhalten werden. Die ultradünnen Polyesterdeckschichten können mühelos von der Trägerschicht getrennt (delaminiert) werden. Messungen der Verbundfestigkeit (Delaminierkraft) ergaben Werte von 0,32 bis 0,47 N/15 mm. Aus Untersuchungen der physikalischen Eigenschaften dieser Polyesterschichten resultiert, daß die über Trägertechnik hergestellten Polyesterfolien Eigenschaften aufweisen, die im wesentlichen den Eigenschaften einer über konventionelles Verfahren (freitragend) hergestellten PET-Kondensatorfolie entsprechen.

Beispiel 4

Führt man die ABA-Mehrschichtfolie mit den Polyesterdeckschichten vor der Verstreckung durch ein auf 80 °C temperiertes Wasserbad, kann das Flächenstreckverhältnis um 20 % auf $\lambda_F$ = 20,5 erhöht werden. Es resultieren dann ultradünne Polyesterdeckschichten von 0,4 $\mu$m bis 0,5 $\mu$m Dicke bei hervorragender Dickengleichmäßigkeit.

Die Gegenüberstellung der Ergebnisse der Versuche und der Vergleichsversuche (Tabelle) zeigt eindrücklich die Überlegenheit des erfindungsgemäßen Verfahrens auf.

Tabelle

| | Konventionelle Verfahren (freitragend) | Trägertechnik | erfindungsgemäßes Verfahren |
|---|---|---|---|
| Laufsicherheit des Verfahrens* | - | + | + |
| Dickengleichmäßigkeit* | - | +- | + |
| Erhöhung Flächenstreckverhältnis* | - | +- | + |
| Dickenreduzierung* | - | +- | + |
| Delaminierbarkeit* | ./. | + | + |

* jeweils bezogen auf die Dünnstfolie

+ = gut
+- = befriedigend
- = schlecht

## Patentansprüche

1. Verfahren zur Herstellung biaxial gestreckter Folienbahnen aus thermoplastischem Kunststoff mit einer Dicke von weniger als 2 $\mu$m, bei dem wenigstens zwei Folienbahnen übereinanderliegend gemeinsam in Längs- und Querrichtung gestreckt werden, dadurch gekennzeichnet, daß die Folienbahnen vor dem ersten Streckschritt in Längs- oder Querrichtung übereinanderliegend gemeinsam einer Wärmebehandlung unterzogen werden.

2. Verfahren nach Anspruch 1, dadurch gekennzeichnet, daß die Wärmebehandlung bei Temperaturen oberhalb der Glastemperatur des Kunststoffs, der für die Folie mit einer Dicke von 2 $\mu$m und kleiner vorgesehen ist, durchgeführt wird.

3. Verfahren nach Anspruch 1 oder 2, dadurch gekennzeichnet, daß die Wärmebehandlung mittels Wasserbad, Heißluft oder Wärmestrahler über eine Zeitdauer von kleiner/gleich 60 s, vorzugsweise kleiner 30 s, durchgeführt wird.

4. Verfahren nach einem der Ansprüche 1 bis 3, dadurch gekennzeichnet, daß nach der Wärmebehandlung die Folienbahnen übereinanderliegend gemeinsam der biaxialen Strekkung in Längs- und Querrichtung unterzogen werden, wobei das Flächenstreckverhältnis größer/gleich 16 ist, vorzugsweise größer/gleich 20.

5. Verfahren nach einem der Ansprüche 1 bis 4, dadurch gekennzeichnet, daß die Wärmebehandlung mittels eines Wasserbades bei einer Temperatur im Bereich von 50 bis 90 °C, bevorzugt zwischen 70 und 80 °C, durchgeführt wird.

6. Verfahren nach einem der Ansprüche 1 bis 5, dadurch gekennzeichnet, daß als thermoplastische Kunststoffe synthetische Polymere wie Polyolefine, Polyester, Polyamide, Polysulfone wie Polyarylethersulfone, Polyaryletherketone, Polyphenylensulfide oder Polystyrole eingesetzt werden.

7. Verfahren nach einem der Ansprüche 1 bis 6, dadurch gekennzeichnet, daß das Zusammenführen der Folienbahnen nach dem Laminierverfahren bewerkstelligt wird, bei dem getrennt voneinander hergestellte Einzelfolien unter Einwirkung von Druck und/oder Wärme miteinander zu einem Mehrlagenverbund vereinigt werden.

8. Verfahren nach einem der Ansprüche 1 bis 6, dadurch gekennzeichnet, daß das Zusammenführen der Folienbahnen nach dem Coextrusionsverfahren bewerkstelligt wird, bei dem die Schmelzen der einzelnen Kunststoffe zusammengeführt und gemeinsam durch eine Düse extrudiert werden.

9. Verfahren nach einem der Ansprüche 1 bis 8, dadurch gekennzeichnet, daß das Zusammenführen der Folienbahnen so bewerkstelligt wird, daß die Haftkräfte zwischen den Folienbahnen kleiner/gleich 0,5 N/15 mm sind.

10. Verwendung einer nach dem Verfahren eines der Ansprüche 1 bis 9 hergestellten Folie mit einer Dicke von kleiner/gleich 2 $\mu$m als Dielektrikum in elektrischen Kondensatoren.